# EUROPEAN PATENT APPLICATION

(11) **EP 1 816 567 A2**
(43) Date of publication of application: **08.08.2007**
(21) Application number: 06020977.2
(22) Date of filing: 05.10.2006
(51) Int. Cl.: G06F 11/34

(54) **Progress tracking method for uptime improvement**

(30) Priority: 07.12.2005 US 296173
(71) Applicant: GM Global Technology Operations, Inc., Detroit, MI 48265-3000 (US)
(72) Inventor: Nickolaou, James N., Clarkston Michigan 48348 (US); Baker, Henry W., Novi Michigan 48375 (US); Fuller, John C., Rockvale Tennessee 37174 (US)
(74) Representative: Manitz, Finsterwald & Partner GbR

(57) **Abstract**

A system for tracking uptime performance improvement includes a pre-process module that retrieves operation data based on pre-process parameters. A post process module filters the operation data based on post process parameters. A trends module that automatically determines a top number of offenders from the operation data. And a report module reports the operation data and the top number of offenders.

## Description

### FIELD OF THE INVENTION

The present invention relates to automated production systems, and more particularly to methods and systems for tracking the progress of uptime performance in automated production systems.

### BACKGROUND OF THE INVENTION

With current advancements in technology, many types of processes can now be automated. Automated systems are becoming increasingly pervasive in a variety of business enterprises. One area of automation can be found in the manufacturing industry. For example, manufacturing enterprises are enhancing their operations by installing automated machinery for producing finished goods as well as unfinished goods such as subassemblies.

Business enterprises, however, are often faced with significant challenges when it comes to maintaining their automated equipment and minimizing downtime. Operational issues should be identified and addressed in an efficient and timely manner. Many factors contribute to the downtime of the enterprise on a daily basis. Factors may include machine breakdowns, tardy personnel, slow working personnel, process rejects that put products into repair lanes, and automated stations working beyond their expected cycle time.

Identifying issues and tracking their progress is not an easy task. In some cases, the necessary information may simply not be available from the system equipment, such as in the case of outdated manufacturing systems. In the case of newer systems, the information may be available, however, due to its sheer volume, may be difficult to interpret, filter or prioritize.

Automated collection systems have been developed to capture issues of the business enterprise. Collection systems capture and store data pertaining to operations of the enterprise, faults that occur for each operation, a number of incidences per fault, and a corresponding downtime for the number of incidences. For large enterprises, the data in raw form can be overwhelming. Without a method of organizing and tracking the data, a business enterprise may not be able to improve the efficiency of the business. Further a business enterprise may not be able to improve the uptime performance of the enterprise.

### SUMMARY OF THE INVENTION

A system for tracking uptime performance improvement includes a pre-process module that retrieves operation data based on pre-process parameters. A post process module filters the operation data based on post process parameters. A trends module that automatically determines a top number of offenders from the operation data. And a report module reports the operation data and the top number of offenders.

In other features, the trends module applies an indication scheme to the top number of offenders and the report module reports the top number of offenders according to the indication scheme.

In still other features, the system further includes a report data graphical user interface that displays the operation data. The report module can report the operation data in a spreadsheet format including a plurality of rows and a plurality of columns. The report module can also report the operation data in a graph format. The operation data can be reported as raw data and/or summary data.

In another feature, the system includes a sort module that sorts the operation data based a sort by operation command and/or a sort by fault string command.

In yet other features, the system includes a configuration graphical user interface that accepts configuration parameters. The pre-process module retrieves operation data based on the configuration parameters and the post process module filters operation data based on the configuration parameters.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

### BRIEF DESCRIPTION OF THE DRAWINGS

The present invention will become more fully understood from the detailed description and the accompanying drawings, wherein:

Figure 1 is a functional block diagram illustrating the progress tracking system according to the present invention;

Figure 2 is a dataflow diagram illustrating the flow of data between modules of the progress tracker module;

Figure 3 is a graphical user interface according to the present invention;

Figure 4 is a sequence diagram illustrating exemplary steps taken by a user of the progress tracking system when interacting with the graphical user interface;

Figure 5 is a report data graphical user interface including an exemplary format for summary report data;

Figure 6 is a report data graphical user interface including an exemplary format for trends data; and

Figure 7 is a report data graphical user interface including an exemplary format for graph data.

### DETAILED DESCRIPTION OF THE PREFERRED EMBODIMENTS

The following description of the preferred embodiment(s) is merely exemplary in nature and is in no way intended to limit the invention, its application, or uses. For purposes of clarity, the same reference numbers will be used in the drawings to identify the same elements. As used herein, the term module and/or device refers to an application specific integrated circuit (ASIC), an electronic circuit, a processor (shared, dedicated, or group) and memory that execute one or more software or firmware programs, a combinational logic circuit, and/or other suitable components that provide the described functionality.

The methods and systems according to the present invention gather reliable downtime durations and incidences for assets of an automated operation. The method and system delivers a set of analytical reports, tools and methods that identify problematic offending assets and their causes of downtime. The tools and methods are then used to improve the efficiency of the operation.

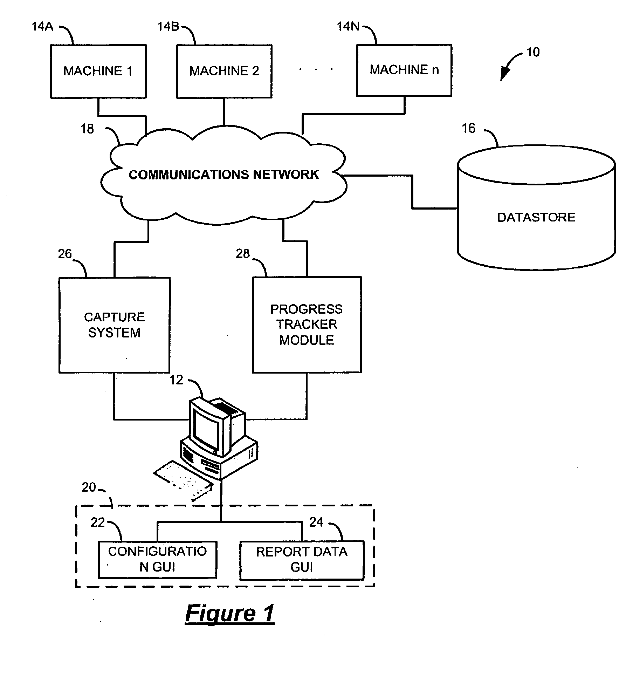

With initial reference to the block diagram of Figure 1, a progress tracking system of a business enterprise according to the present invention is illustrated and referenced generally at 10. The system 10 is generally shown to include a host computer 12. The system 10 is further shown to include a plurality of machines 14A-14N typical to the business enterprise. A datastore 16 stores operational data received from the plurality of machines 14A-14N and the host computer 12 via a communications network 18. The datastore 16 can be a database located on a remote server or can be implemented as memory either being in the form of random access memory (RAM) or read only memory (ROM) of the host computer. Datastore 16 stores information pertaining to operation losses, such information includes but is not limited to, operations performed by a machine, fault strings indicating faults that occur for an operation, number of incidences the fault occurred, and downtime that occurred due to the incidences. As can be appreciated, the communications network 18 can be any type or combination thereof of known networks including, but not limited to, a wide area network (WAN), a local area network (LAN), a global network (e.g. Internet), a virtual private network (VPN), and an intranet.

As will be discussed further below, host computer 12 selectively retrieves operation data from the datastore 16 and displays the data to a user of the host computer via a graphical user interface (GUI) 20. The GUI includes a configuration GUI 22 and a report data GUI 24. A user of the host computer can view and interpret the data displayed via the GUI 20 and act accordingly to remedy the cause of the downtime or production losses. The user can further use the GUI 20 to track the progress of uptime for system events.

The host computer 12 of the system 10 further includes a processor (not shown) operable to execute one or more set of software instructions contained in a module. The processor executes software instructions contained in a capture system data module 26. Capture system data module 26 collects and processes operation data generated by machines 14A-14N. The teachings of the capture system data module 26 are described in US Patent Application Serial No. 10/968494 and are incorporated herein by reference. The processor also executes software instructions contained in a progress tracker module 28. As will be discussed in more detail below, progress tracker module 28 filters, sorts, and reports operational data generated by machines 14A-14N.

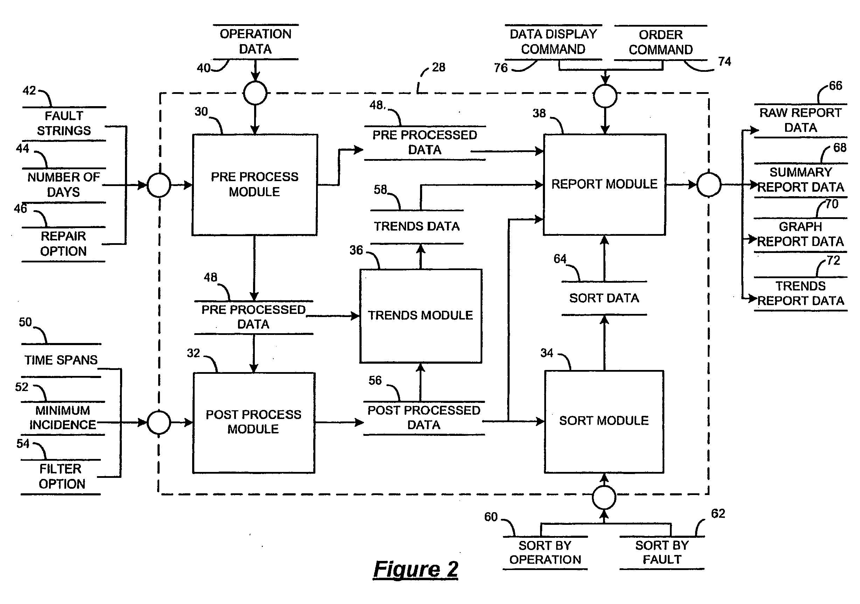

Referring now to Figure 2, a data flow diagram illustrates the progress tracker module 28 in more detail. Progress tracker module 28 includes a pre-process module 30, a post process module 32, a sort module 34, a trends module 36, and a report module 38. Pre-process module 30 receives operation data 40 retrieved from the datastore. Pre-process module 30 is further receptive of configuration parameters entered by a user of the host computer. Configuration parameters allow a user to selectively retrieve operation data 40. Configuration parameters can be fault strings 42, a number of days 44, and a repair time option 46. Pre-process module 30 retrieves operation data 40 identified by fault strings 42 for a specified number of days 44. If repair time option 46 is received, pre-process module 30 retrieves only operation data 40 corresponding to an incident that required actual repair on a machine. Pre-process module 30 transfers pre-processed operation data 48 to post process module 32 and report module 38.

Post process module 32 receives the pre-processed operation data 48. Post process module filters the pre-processed operation data 48 based on configuration parameters entered by a user of the host computer. Configuration parameters can be a plurality of time spans 50, a minimum incidences number 52, and a filter summary option 54. Post process module 32 excludes operation data not within specified time spans 50. Time spans 50 can be defined by start dates and time periods. Post process module excludes operation data with incidences below a minimum number 52. If the filter summary option 54 is received, post process module 32 excludes operation data older than the oldest time span. Post process module 32 transfers post processed operation data 56 to sort module 34, trends module 36, and report module 38.

Trends module 36 is receptive of post processed operation data 56. Trends module 36 determines a total number of incidences per fault and a total time per fault. Trends module 36 also determines a total number of incidences per fault per time period and a total time per fault per time period and applies an indication scheme to the totals. The indication scheme indicates to a user of the host computer an occurrence of a top number of faults/offenders in a given time period. In the preferred embodiment, the indication scheme is a color scheme where the top 1 to 5 faults for a given period may be indicated in red, the top 6 to 13 faults for a given period may be indicated in orange, the top 11 to 15 faults for a given week may be indicated in yellow, and the top 16 to 20 faults for the week can be indicated in another color. As can be appreciated, the indication scheme can be any known method of visually marking data including shading schemes and background schemes where the background of a text box including the data is formatted with a specified shade or background. Trends module 36 transfers trends operation data 58 to report module 38.

Sort module 34 is receptive of post processed operation data 56. Additionally, sort module 34 can be receptive of pre-processed operation data 48 and/or trends operation data 58 (data flow not shown). Sort module 34 sorts the data received based on sort commands entered by a user of the host computer. Sort commands can be sort by operation 60 or sort by fault string 62. Sorted data 64 is transferred to report module 38.

Report module 38 receives operation data from pre-process module 30, sort module 34, trends module 36 and post process module 32 and displays the data accordingly. Report module can display raw data 66, summary data 68, graph data 70, and/or color coded trends data 72. Report module 38 is further receives an order command 74 and a data display command 76. Upon reception of the order command 74, report module 38 arranges and displays operation data in either an ascending order or a descending order. Upon reception of the data display command 76, report module arranges and displays operation data in either a raw data format, a summary format, or a graph format.

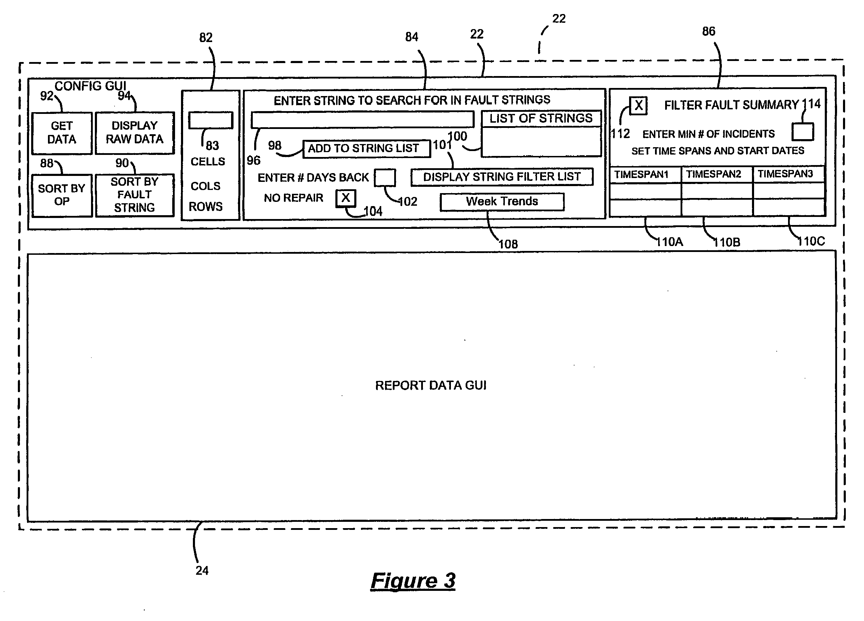

Referring now to Figure 3, an exemplary graphical user interface for accepting user input and displaying operation data is shown generally at 20. GUI 20 includes a configuration GUI 22 for accepting user input and a report data GUI 24 for displaying operation data. The configuration GUI 22 includes a progress report box 82, a pre-process configuration box 84, a post process configuration box 86, a sort by operation button 88, a sort by fault string button 90, a get data button 92, and a display raw data button 94. The progress report box 82 displays the status in a status box 83 and reports a total number of rows, columns and cells of the operation data retrieved from the datastore.

Referring now to the pre-process configuration box 84, a string field 96 allows a user to enter a fault string or partial fault string to process. The fault string can be added to a list of fault strings by clicking on an add button 98. A drop list box 100 provides a visual of the list of fault strings added to the list. A display string filter list button 101 displays a list of all strings entered. In an exemplary embodiment the list of strings displayed can be unique as to each user of the system. A number field 102 allows a user to enter a number corresponding to the number of days back to process. A check box 104, when checked by the user, indicates to the pre-process module to exclude fault strings for operations that did not require a repair. A week trends button 108, when clicked on, communicates to the trends module to execute.

Referring now to the post-process configuration box 86, time span boxes 110A-110C allow a user to enter a date and a time period for any number of time spans. A check box 112, when checked by the user, indicates to the post filtration module to exclude operation downtime losses older than the oldest time span entered in the time span boxes 110A-110C. A number field 114 allows a user to enter a minimum number of total incidents. Post process module will exclude faults with a total incidents number below the minimum number.

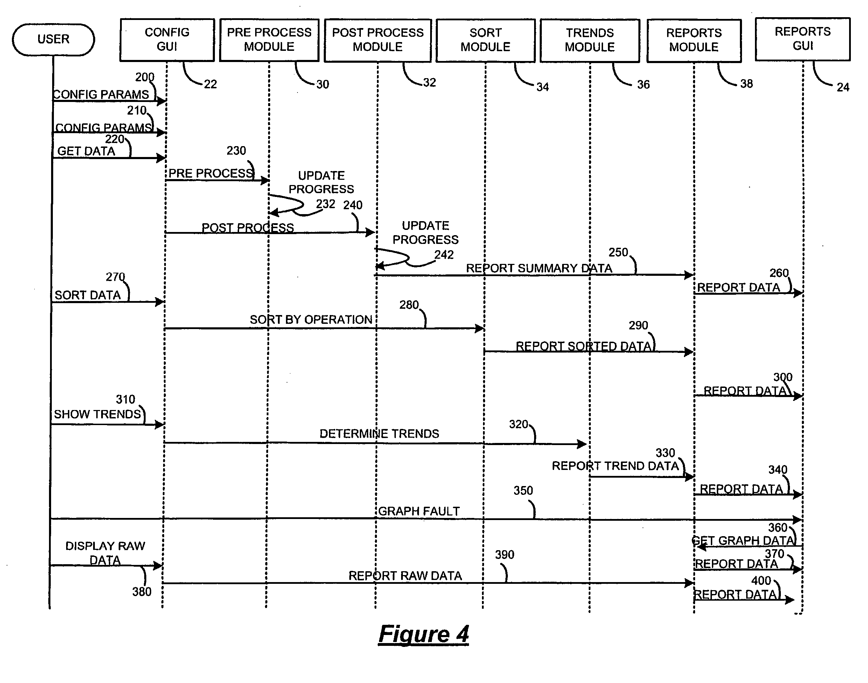

With continued reference to Figure 3 and turning now to Figure 4, a sequence diagram illustrates the interaction between a user of the host computer and the GUIs 22,24, and the GUIs interaction with pre-process module 30, post process module 32, sort module 34, trends module 36 and reports module 38. As can be appreciated, the sequence diagram is merely exmpleary in nature. A user may chose to vary the sequence of steps according to his or her preferences.

User configures pre process parameters in step 200 by entering data in the pre process configuration box 84 of the configuration GUI 22. User configures post process parameters in step 210 by entering data in the post process configuration box 86 of the configuration GUI. Once configuration is complete, in sequence step 220 user clicks on the get data button 92 of configuration GUI 22. Configuration GUI 22 commands to the pre-process module 30 in step 230 and the post process module 32 in step 240 to execute based on the parameters entered in sequence steps 200 and 210. Progress of the processing performed by pre-process module 30 and post process module 32 is displayed in the progress report box 82 in steps 232 and 242. Once processing is complete, in step 250, post process module commands report module 38 to report operation data in a summary format. Report module 38 posts summary data to the report data GUI 24 and updates a number of rows, columns, and cells in the progress report box 82.

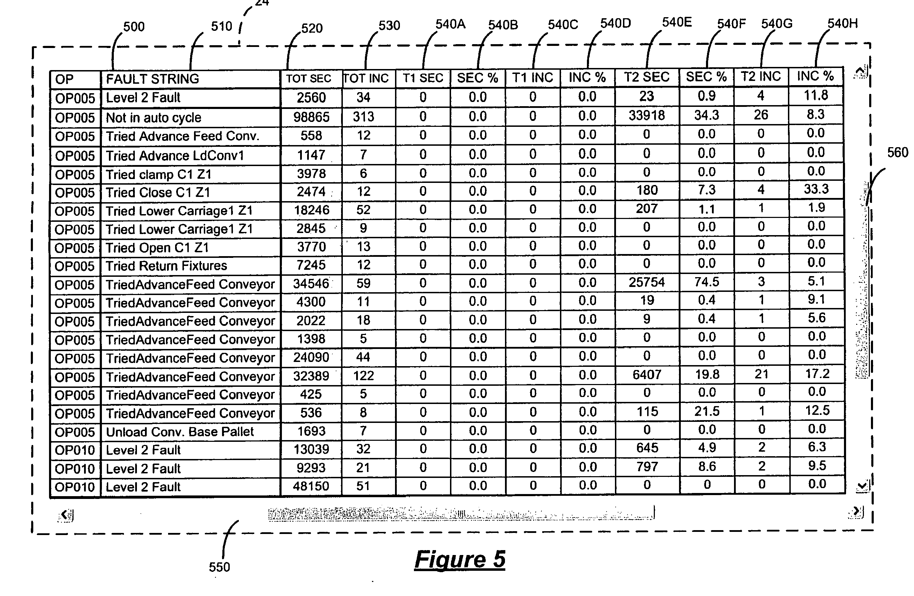

Figure 5 illustrates an exemplary format for displaying summary data. The format can be a spreadsheet including a plurality of rows and columns. The columns can include operations 500, fault strings 510, total incidences per fault string 520, and total seconds per fault string 530. For each time span entered in the time span boxes, a total seconds per time span, a percent of total seconds for time span, a total incidences per time span, and a percent of total incidences for time span are entered in the remaining columns 540A-540H. Horizontal and vertical scroll bars 550 and 560 allow a user to traverse through the columns and rows of operation data.

Referring back to Figures 3 and 4, user may choose to sort the summary data by clicking on the sort by operation button 88 or the sort by fault string button 90. In step 270, user clicks on sort by fault string button 90 of configuration GUI 22. Configuration GUI 22 commands sort module 34 to sort operation data based on fault strings in step 280. Sort module commands report module to report sorted data in step 290. Report module 38 posts sorted data to the report data GUI 24 in step 300. Trends data can be posted in a spreadsheet format similar to that of Figure 5 where the rows of the spreadsheet are displayed in a sorted order.

User may chose to display trends of the operation data by clicking on the week trends button 108 in step 310. Configuration GUI 22 commands trends module 36 to automatically determine trends and apply an indication scheme to operation data in step 320. Trends module 36 commands report module 38 to report trends data according to the indication scheme in step 330. Report module 38 posts trends data to report data GUI 24 in step 340.

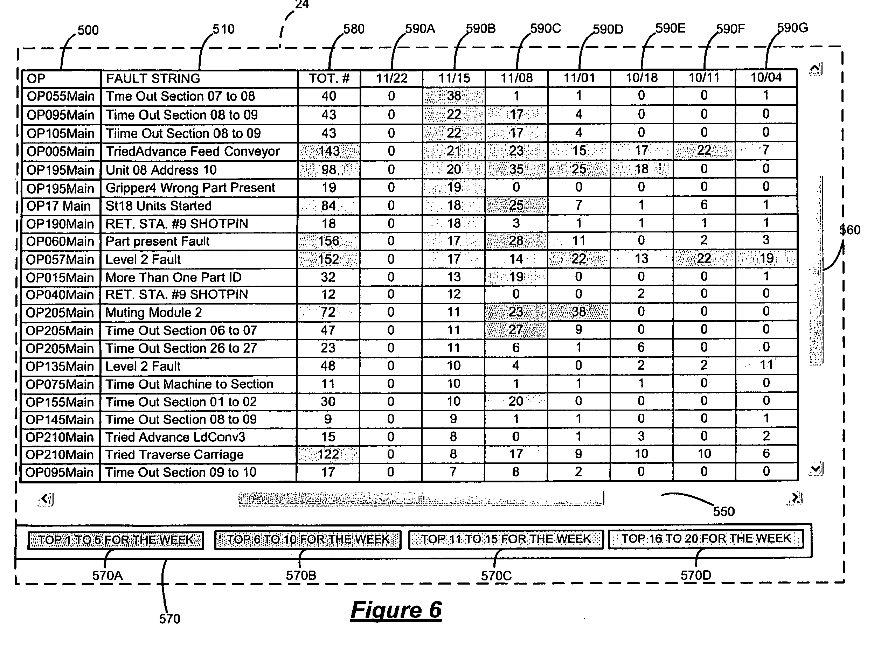

Figure 6 illustrates an exemplary format for displaying trends data. A key 570 indicates the indication scheme applied by trends module. For exemplary purposes, a shading scheme is used as the indication scheme. Boxes 570A-570D of the key display a different shade that corresponds to a top number of offenders per time period. In this example, the time period is a week. Cells containing the operation data for the top number of offenders are highlighted with the corresponding shade. From the shading scheme, a user of the system can easily identify the top offending assets of the business and act accordingly to remedy the situation. Users can also track the progress of the offending assets from time period to time period.

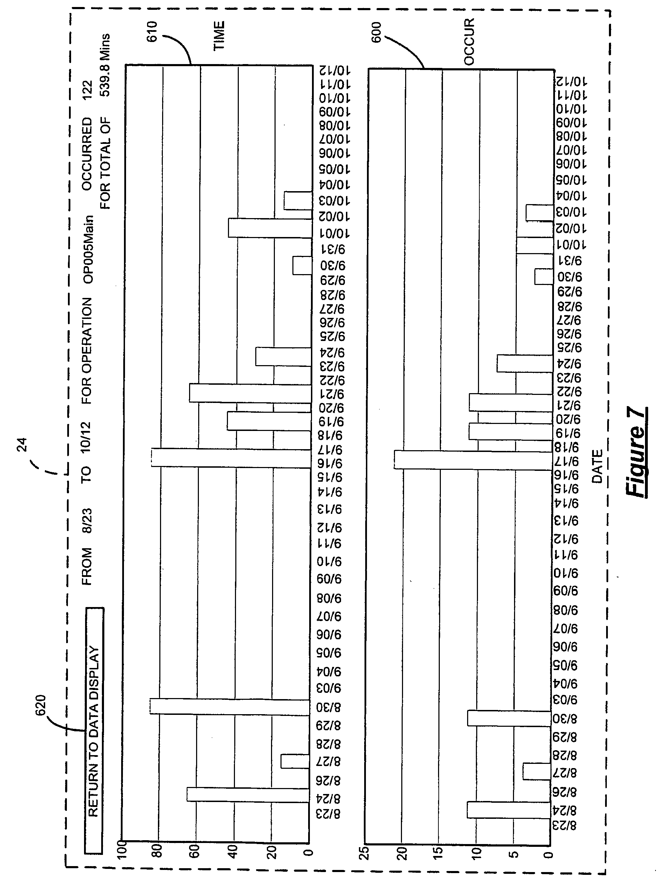

Referring back to Figures 3 and 4, the user may choose to display operation data for a given fault string in a graph format. In step 350, user clicks on a fault string listed in the report data GUI 24. Report data GUI 24 commands report module 38 to prepare a graph report for the fault string in step 360. Report module 38 posts graph data to report data GUI 24 in step 370. Figure 7 illustrates an exemplary format for displaying graph data. A bar graph illustrating the number of downtime in minutes per day is shown at 600. A bar graph illustrating the number of downtime incidences per day is shown at 610. A return to data display button 620 allows a user to return to displaying the trends data in the report data screen.

Referring back to Figures 3 and 4, the user may choose to display operation data per day in a raw data format. In step 380, user clicks on display raw data button 94 of configuration GUI 22. Configuration GUI 22 commands report module 38 to report raw data in step 390. Report module 38 posts raw operation data to reports data GUI 24 in step 400. The raw data can be displayed in a spreadsheet format similar to Figure 5 where each column corresponds to a date.

Those skilled in the art can now appreciate from the foregoing description that the broad teachings of the present invention can be implemented in a variety of forms. Therefore, while this invention has been described in connection with particular examples thereof, the true scope of the invention should not be so limited since other modifications will become apparent to the skilled practitioner upon a study of the drawings, the specification and the following claims.

## Claims

1. A method of tracking uptime performance improvement of a business enterprise, comprising:
configuring pre-process parameters wherein the pre-process parameters correspond to at least a fault string;
configuring post process parameters wherein the post process parameters correspond to a plurality of time spans;
processing operation data based on said pre-process parameters and said post process parameters; and
reporting said processed operation data.

2. The method of claim 1 further comprising determining a top number of offenders of the operation data and applying an indication scheme to said operation data based on said top number of offenders and wherein said step of reporting further comprises reporting said operation data according to said indication scheme.

3. The method of claim 1 wherein determining a top number of offenders is based on a determined total number of incidences per fault per time period and a total time per fault per time period.

4. The method of claim 1 wherein said step of configuring pre-process parameters further comprises:
entering at least one of a fault string and a partial fault string in a configuration graphical user interface; and
entering a number of days back in said configuration graphical user interface.

5. The method of claim 4 wherein said step of configuring pre-process parameters further comprises checking a no repair time box in said configuration graphical user interface.

6. The method of claim 1 wherein said step of configuring post process parameters further comprises:
entering a plurality of time spans in a configuration graphical user interface, wherein said time spans include a start date and a time period; and
entering a minimum number of incidences in said configuration graphical user interface.

7. The method of claim 6 wherein said step of configuring post process parameters further comprises checking a filter summary option box of said configuration graphical user interface.

8. The method of claim 1 wherein said step of processing said operation data further comprises:
retrieving a first set of operation data from a datastore corresponding to said pre-process parameters; and
retrieving operation data from said first set of operation data corresponding to said post process parameters.

9. The method of claim 1 further comprising sorting said processed operation data by operation.

10. The method of claim 1 further comprising sorting said processed operation data by fault string.

11. The method of claim 10 wherein said processed operation data can be sorted in an ascending or descending order according to a time period.

12. The method of claim 1 wherein said step of reporting further comprises reporting said operation data in a summary format.

13. The method of claim 1 wherein said step of reporting further comprises reporting said operation data in a raw data format.

14. The method of claim 1 wherein said step of reporting further comprises reporting said operation data in a graph format.

15. The method of claim 1 further comprising:
analyzing said reported operation data;
determining a problem asset; and
acting to remedy said problem asset.

16. The method of claim 1 wherein said step of processing further comprises processing operations data that includes operations, fault strings, incidences, and times.

17. A system for tracking uptime performance improvement, comprising:
a pre-process module that retrieves operation data based on pre-process parameters;
a post process module that filters said operation data based on post process parameters;
a trends module that automatically determines a top number of faults from said operation data; and
a report module that reports said operation data and said top number of faults.

18. The system of claim 17 wherein said top number of faults is determined based on a total number of incidences per fault per time period and a total time per fault per time period and wherein said trends module applies an indication scheme to said top number of faults and said report module reports said top number of faults according to said indication scheme.

19. The system of claim 17 further comprising a report data graphical user interface that displays said operation data.

20. The system of claim 17 further comprising a sort module that sorts said operation data based on at least one of a sort by operation command and a sort by fault string command.

21. The system of claim 17 wherein said report module reports said operation data in a spreadsheet format including a plurality of rows and a plurality of columns.

22. The system of claim 17 wherein said operation data can be raw data.

23. The system of claim 17 wherein said operation data can be summary data.

24. The system of claim 17 wherein said report module reports said operation data in a graph format.

25. The system of claim 17 further comprising a configuration graphical user interface that accepts configuration parameters wherein said pre-process module retrieves operation data based on said configuration parameters and said post process module filters operation data based on said configuration parameters.

26. The method of claim 17 wherein said operation data includes operations data, fault strings data, incidences data, and times data.

27. A method of tracking uptime performance improvement, comprising:
retrieving operation data based on parameters;
determining a top number of faults of said operation data;
applying an indication scheme to said top number of faults; and
reporting said operation data according to said indication scheme.

28. The method of claim 27 wherein said step of retrieving further comprises retrieving operations data, fault string data, incidences data, and times data stored in a datastore.

29. The method of claim 27 further comprising sorting said operation data.

30. The method of claim 27 further comprising reporting fault data of said operation data in a graph format.

31. The method of claim 27 wherein said step of reporting further comprises reporting said operation data in a spreadsheet format.

32. The method of claim 27 further comprising receiving parameters from a graphical user interface.
